(19) Europäisches Patentamt
European Patent Office
Office européen des brevets

(11) Veröffentlichungsnummer : **0 027 622**
**B1**

# (12) EUROPÄISCHE PATENTSCHRIFT

(45) Veröffentlichungstag der Patentschrift : **26.01.83**

(51) Int. Cl.³ : **C 07 C145/00**, A 01 N 41/06

(21) Anmeldenummer : **80106203.5**

(22) Anmeldetag : **11.10.80**

(54) **Sulfonsäurecycloalkylamide, Verfahren zu ihrer Herstellung und ihre mikrobizide Verwendung.**

(30) Priorität : **23.10.79 DE 2942677**

(43) Veröffentlichungstag der Anmeldung : **29.04.81 Patentblatt 81/17**

(45) Bekanntmachung des Hinweises auf die Patenterteilung : **26.01.83 Patentblatt 83/04**

(84) Benannte Vertragsstaaten : **BE CH DE FR GB IT LI NL SE**

(56) Entgegenhaltungen :
**US A 4 068 000**
**US A 4 107 332**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Kühle, Engelbert, Dr.**
**von-Bodelschwinghstrasse 42**
**D-5060 Bergisch-Gladbach (DE)**
Erfinder : **Paulus, Wilfried, Dr.**
**Deswatinesstrasse 90**
**D-4150 Krefeld (DE)**
Erfinder : **Genth, Hermann, Dr.**
**Am Heckerhof 60**
**D-4150 Krefeld (DE)**
Erfinder : **Klauke, Erich, Dr.**
**Eichendorffweg 8**
**D-5068 Odenthal (DE)**

**EP 0 027 622 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Sulfonsäurecycloalkylamide, Verfahren zu ihrer Herstellung und ihre mikrobizide Verwendung

Die Erfindung betrifft neue Sulfonsäurecycloalkylamide, ein Verfahren zu ihrer Herstellung und ihre mikrobizide Verwendung.

Zum Schutz von technischen Materialien, wie beispielsweise Holz, ist es im allgemeinen nicht möglich, einen festen Wirkstoff in das Material einzuarbeiten. Es ist daher üblich, den Wirkstoff mit einem Lösungsmittel zu formulieren und so in das Material einzubringen (Chemie der Pflanzenschutz- und Schädlingsbekämpfungsmittel, Band 4, Seiten 257 bis 272, Springer Verlag 1977).

Die Wirkung von N,N-Dimethyl-N-phenyl-N-(fluordichlormethylthio)-sulfamid gegen holzschädigende Pilze wird in « Holz als Roh- und Werkstoff » *35*, 233-237 (1977) beschrieben. Diese Verbindung löst sich jedoch in den für Holzschutzmittel üblichen Lösungs- bzw. Formulierungsmitteln sehr schlecht, so daß große Lösungsmittelmengen erforderlich sind, um die erforderliche Wirkstoffmenge auf und/oder in das Holz zu bringen.

Dieses Problem wird auch nicht durch die aus den US 40 68 000 und US 41 07 337 bekannten Sulfonsäurealkylamide gelöst. Die dort beschriebenen Verbindungen haben im wesentlichen eine Wirksamkeit bei der Bekämpfung von Milben.

Dieses Problem wird mit Hilfe der erfindungsgemäßen neuen N-sulfenylierten Sulfonsäurecycloalkylamiden u.a. gelöst.

Es wurden neue N-sulfenylierte Sulfonsäurecycloalkylamide der Formel

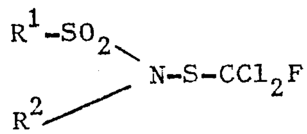

worin

$R^1$ Niederalkyl, Chloralkyl oder Dialkylamino und

$R^2$ ein gegebenenfalls durch Niederalkyl substituierter Cycloalkylrest bedeuten gefunden.

Niederalkylreste ($R^1$) können geradkettige oder verzweigte aliphatische Kohlenwasserstoffreste mit 1 bis etwa 6 Kohlenstoffatomen sein. Bevorzugte Niederalkylreste sind der Methyl- und der Ethylrest. Beispielsweise seien die folgenden Niederalkylreste genannt: Methyl, Ethyl, Propyl, Isopropyl, Butyl, Isobutyl, Pentyl, Isopentyl, Hexyl und Isohexyl.

Als Chloralkylreste ($R^1$) seien im wesentlichen die Niederalkylreste ($R^1$) genannt, in denen Wasserstoffatome durch ein oder mehrere Chloratome substituiert sind.

Bevorzugte Chloralkylreste enthalten 1 bis 3 Chloratome, bevorzugt 1 Chloratom.

Dialkylaminoreste ($R^1$) sind im allgemeinen zwei, gegebenenfalls verschiedene Niederalkylreste ($R^1$) tragende Aminogruppen. Bevorzugte Dialkylaminoreste sind der Dimethyl- und der Diethylaminorest.

Als Cycloalkylreste ($R^2$) seien im wesentlichen der Cyclopentyl und der Cyclohexylrest genannt. Insbesondere bevorzugt ist der Cyclohexylrest. Die Cycloalkylreste können einen oder mehrere Niederalkylreste ($R^1$) als Substituenten tragen. Bevorzugt Niederalkylgruppentragende Cycloalkylreste enthalten 1 bis 4 Niederalkylgruppen, bevorzugt Methyl- oder Ethylgruppen.

Bevorzugte erfindungsgemäße N-sulfenylierte Sulfonsäurecycloalkylamide sind Verbindungen der Formel

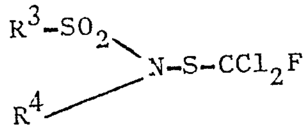

worin

$R^3$ Methyl, Ethyl, Chlormethyl, Chlorethyl, Dimethylamino oder Diethylamino und

$R^4$ ein gegebenenfalls durch 1 bis 4 Methyl- oder Ethylreste substituierter Cyclopentyl- oder Cyclohexylrest bedeuten.

Im einzelnen seien die folgenden neuen N-sulfenylierten Sulfonsäurecycloalkylamide genannt:

N-Dichlorfluormethylsulfenylderivate des Methan-, Ethan- und Butansulfonsäurecyclohexylamids, des Chlormethansulfonsäurecyclohexylamids, des Dimethylaminosulfonsäurecyclohexylamids, des Methansulfonsäurecyclopentylamids und des Methansulfonsäure-3,5,5-trimethylcyclohexylamids.

Es wurde außerdem ein Verfahren zur Herstellung von N-sulfenylierten Sulfonsäurecycloalkylamiden gefunden, das dadurch gekennzeichnet ist, daß man Sulfonsäurecycloalkylamide der Formel

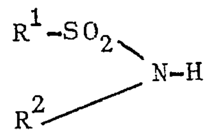

worin

$R^1$ und $R^2$ die obengenannte Bedeutung haben, mit einem Sulfenylchlorid der Formel

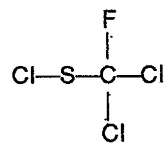

in Gegenwart eines Verdünnungsmittels und eines säurebindenden Mittels umsetzt.

Das erfindungsgemäße Verfahren kann anhand der folgenden Reaktionsgleichung erläutert werden :

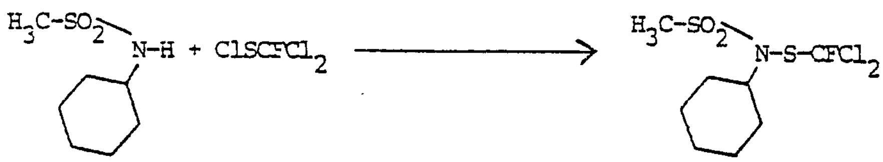

Sulfonsäurecycloalkylamide für das erfindungsgemäße Verfahren können nach an sich bekannten Methoden aus den entsprechenden Sulfonsäurechloriden und primären Cycloalkylaminen hergestellt werden (Houben-Weyl, 4. Aufl. Bd. 9, S. 398). Beispielsweise seien genannt : Methan-, Ethan-, Butansulfonsäurecyclohexylamid, Methansulfonsäurecyclopentylamid, Methansulfonsäure(4-methylcyclohexylamid), Methansulfonsäure(3,5,5-trimethylcyclohexylamid), Chlormethansulfonsäurecyclohexylamid, 2-Cyclopentansulfonsäurecyclohexylamid, Dimethylaminocyclohexylamid.

Sulfenylchloride sind bekannt (Houben-Weyl, 4. Aufl., Bd. 9, Seite 787, Angew. Chem. *76* 807 (1964)).

Beispielsweise seien für das erfindungsgemäße Verfahren die folgenden Sulfenylchloride genannt : Trichlormethan- und Dichlorfluormethansulfenylchlorid.

Als Verdünnungsmittel für das erfindungsgemäße Verfahren kommen inerte organische Lösungsmittel in Frage. Hierzu gehören Ether, wie Diethylether und Dioxan, Kohlenwasserstoffe, wie Toluol und Chlorkohlenwasserstoffe, wie Chloroform und Chlorbenzol. Man kann aber auch die Umsetzung in wäßrigem Medium durchführen.

Zur Bindung des bei der Reaktion entstehenden Chlorwasserstoffs setzt man bei dem erfindungsgemäßen Verfahren ein Säurebindemittel zu. Bevorzugt verwendet man ein tertiäres Amin, wie Triethylamin, oder anorganische Basen, wie Alkali-hydroxide (NaOH oder KOH) oder Carbonate ($Na_2CO_3$).

Das erfindungsgemäße Verfahren wird im allgemeinen im Temperaturbereich von 0 bis 100 °C, vorzugsweise von 20 bis 50 °C, durchgeführt.

Das erfindungsgemäße Verfahren wird im allgemeinen bei Normaldruck durchgeführt ; es ist jedoch auch möglich, des Verfahren bei einem Unter- oder Überdruck durchzuführen.

Die Herstellung der neuen N-sulfenylierten Sulfonsäurecycloalkylamide nach dem erfindungsgemäßen Verfahren erfolgt im allgemeinen durch Zusammengeben der Ausgangskomponenten. Nach der Umsetzung wäscht man gegebenenfalls mit Wasser und trennt die organische Phase, die das Reaktionsprodukt enthält, ab. Aus der organischen Phase erhält man kristalline N-sulfenylierte Sulfonsäurecycloalkylamide.

Die erfindungsgemäßen neuen N-sulfenylierten Sulfonsäurecycloalkylamide sind Verbindungen mit besonders hoher mikrobizider Wirkung. Sie können beispielsweise zum Schutz technischer Materialien gegen mikrobiellen Abbau oder eine durch Mikroorganismen bedingte Änderung der technischen Materialien verwendet werden. Technische Materialien sind z.B. Klebstoffe, Leime, Papiere und Kartone, Textilien, Leder, Holz, Anstrichmittel, Putze und Gebindeinhalte, die durch mikrobielle Einwirkung beschädigt oder zerstört werden können. Die erfindungsgemäßen Wirkstoffe sind besonders zum Schutz von Holz geeignet.

Bemerkenswert und überraschend ist ihre gute Löslichkeit in den auf dem Holzschutzsektor gebräuchlichen Lösungsmitteln wie beispielsweise Erdöl- und Benzinfraktionen, wie Testbenzin (niedrigsiedende Kohlenwasserstoffraktion), ferner in Lösungsvermittlern, wie Ethylacetat und Xylol. Bevorzugt sind Gemische aus aromatischen Kohlenwasserstoffen (Kp 150 bis 180 °C) und Benzinfraktionen (Kp 140 bis 200 °C).

Mikroorganismen, die einen Abbau oder eine Veränderung der technischen Materialien bewirken können, sind beispielsweise Bakterien, Pilze und Algen.

Als Bakterien und Pilze seien beispielsweise genannt :

Escherichia coli, Staphylococcus aureus, Penicillium glaucum, Chaetomium globosum, Aspergillus niger, Coniophora cerebella, Cladosporium herbarum, Alternaria tenuis, Pullularia pullulans.

Die erfindungsgemäßen neuen N-sulfenylierten Sulfonsäurecycloalkylamide haben eine besonders hohe fungizide Wirkung.

Je nach ihrem Anwendungsgebiet können die erfindungsgemäßen neuen N-sulfenylierten Sulfonsäurecycloalkylamide in die üblichen Formulierungen überführt werden, wie Lösungen, Emulsionen, Suspensionen, Pulver, Pasten und Granulate. Diese können in an sich bekannter Weise hergestellt werden, z.B. durch Vermischen der Wirkstoffe mit einem Streckmittel, das aus flüssigem Lösungsmittel und/oder aus festen Trägerstoffen bestehen kann, gegebenenfalls unter Verwendung von oberflächenaktiven Mitteln, wie Emulgatoren und/oder Dispergiermitteln. Im Falle der Benutzung von Wasser als Streckmittel können gegebenenfalls organische Lösungsmittel als Hilfslösungsmittel verwendet werden.

Die erfindungsgemäßen neuen Wirkstoffe können in den Formulierungen in Mischung mit anderen bekannten Wirkstoffen vorliegen. Beispielsweise seien die folgenden Wirkstoffe genannt : Benzimidazolyl-alkylcarbamat, Tetramethyl-thiuramdisulfid, N-Fluordichlormethylthio-phthalimid und N,N-Dimethyl-N'-phenyl-(N'-fluordichlormethylthio)-sulfamid.

Die Anwendungskonzentrationen der erfindungsgemäßen Mikrobizide richten sich nach der Art und dem Vorkommen der zu bekämpfenden Mikroorganismen, sowie nach der Zusammensetzung des zu schützenden Materials. Die optimale Einsatzmenge kann durch Testreihen ermittelt werden. Im allgemeinen liegen die Anwendungskonzentrationen im Bereich von 0,05 bis 5 Gew.-%, vorzugsweise 0,5 bis 3 Gew.-%, bezogen auf das zu schützende Material.

## Herstellungsbeispiele :

### Beispiel 1

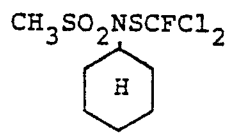

106 g (0,6 Mol) Methansulfosäurecyclohexylamid und 102 g (0,6 Mol) Dichlorfluormethansulfenylchlorid werden in 500 ml Toluol gelöst und bei Raumtemperatur tropfenweise mit 68 g Triethylamin versetzt. Die Temperatur steigt bis etwa 40 °C an. Man schüttelt die Reaktionslösung mit Wasser aus, trocknet die Toluollösung und destilliert das Toluol ab. Man erhält 165 g (88 % der Theorie) des N-Dichlorfluormethylsulfenylderivates des Methansulfonsäurecyclohexylamids Fp 60 bis 64 °C.

In ähnlicher Weise erhält man folgende Verbindungen :

### Beispiele 2 bis 9

$$A{-}SO_2\underset{\displaystyle B}{\underset{|}{N}}{-}SCFCl_2$$

(A und B sind die unten aufgeführten Substituenten)

| Bsp. -Nr. | A | B | | |
|---|---|---|---|---|
| 2 | $ClCH_2$ | Cyclohexyl | Fp | 102 °C |
| 3 | $(CH_3)_2N$ | Cyclohexyl | Fp | 70-71 °C |
| 4 | $CH_3$— | 4-Methylcyclohexyl | Fp | 47-48 °C |
| 5 | $ClCH_2$— | 4-Methylcyclohexyl | $n_D^{20}$ | 1.5230 |
| 6 | $(CH_3)_2N$— | 4-Methylcyclohexyl | Fp | 80-85 °C |
| 7 | $CH_3$— | 3,5,5-Trimethylcyclohexyl | $n_D^{20}$ | 1.5056 |
| 8 | $ClCH_2$— | 3,5,5-Trimethylcyclohexyl | $n_D^{20}$ | 1.5138 |
| 9 | $(CH_3)_2N$— | 3,5,5-Trimethylcyclohexyl | $n_D^{20}$ | 1.5005 |

Aus den folgenden Beispielen 10 und 11 geht hervor, daß die erfindungsgemäßen Substanzen im Vergleich zu dem bereits bekannten N,N-Dimethyl-N'(fluordichlormethylthio)sulfamid sowohl besser löslich als auch effektiver sind. Ihre Applikation erfordert daher sowohl weniger Lösungsmittel als auch geringe Wirkstoffmengen, was vor allem im Hinblick auf die Belastung der Umwelt von Vorteil ist.

Beispiel 10

Löslichkeit in Gew.-% des Wirkstoffs gemäß Beispiel 1,3,4 und 6 in organischen Lösungsmitteln [N,N-Dimethyl-N'-phenyl-N'(fluordichlormethylthio)sulfamid wird zum Vergleich angeführt].

| Lösungsmittel | Wirkstoff nach Beispiel 1 | 3 | 4 | 6 | N,N-Dimethyl-N'-phenyl-N'-(fluordichlormethylthio) sulfamid |
|---|---|---|---|---|---|
| Ethylacetat | 67 | 48 | 77 | 29 | 11,7 |
| Methylglykolacetat | 63 | 29 | 71 | 19 | 9,5 |
| Testbenzin | 10 | 8,3 | 7,5 | 7,5 | 1,2 |
| Aromaten (Kp 163-180 °C) | 56 | 36 | 40 | 24 | 7,5 |
| isomere Tetramethylbenzole | 53 | 40 | 79 | 26 | |

Beispiel 11

Zum Nachweis der Wirksamkeit gegen Pilze werden die minimalen Hemm-Konzentrationen (MHK) von erfindungsgemäßen Wirkstoffen bestimmt :

Ein Agar, der aus Bierwürze und Pepton hergestellt wird, wird mit erfindungsgemäßen Wirkstoffen in Konzentrationen von 0,5 mg/l bis 5 000 mg/l versetzt. Nach Erstarren des Agars erfolgt Kontamination mit Reinkulturen der in der Tabelle aufgeführten Testorganismen. Nach zweiwöchiger Lagerung bei 28 °C und 60 bis 70 % relativer Luftfeuchigkeit wird die MHK bestimmt. MHK ist die niedrigste Konzentration an Wirkstoff bei der keinerlei Bewuchs durch die verwendete Mikrobenart erfolgt, sie ist in der nachstehenden Tabelle angegeben.

Angabe der MHK-Werte in mg/l bei der Einwirkung der unten angegebenen Wirkstoffe auf Pilze [Vergleichssubstanz : N,N-Dimethyl-N'-(fluordichlormethylthio)sulfamid].

Tabelle

| Testorganismen | Wirkstoff nach Beispiel : 1 | 2 | 3 | 4 | 5 | 6 | 7 | 8 | 9 | N,N-Dimethyl-N'-phenyl-N'(fluordichlormethylthio) sulfamid (Vergleich) |
|---|---|---|---|---|---|---|---|---|---|---|
| Penic. glaucum | 10 | 10 | 350 | 10 | 10 | — | 500 | 20 | 500 | 35 |
| Chaet. globosum | 1,5 | 10 | 0,5 | 0,5 | 10 | 3,5 | 1,5 | 10 | 7,5 | 20 |
| Asperg. niger | 7,5 | 15 | 10 | 5 | 15 | 100 | 35 | — | 750 | 50 |
| Conioph. cereb. | 0,5 | 0,5 | 0,5 | 0,5 | 0,5 | 0,5 | 0,5 | 0,5 | 0,5 | 10 |
| Cladosp. herb. | 1,5 | 5 | 5 | 0,5 | 5 | 3,5 | 0,5 | 7,5 | 15 | 20 |
| Altern. tenuis | 0,5 | 5 | 1 | 0,5 | 7,5 | 0,5 | 0,5 | 10 | 20 | 20 |
| Pull. pullulans | 0,5 | 5 | 7,5 | 0,5 | 5 | 5 | 5 | 10 | 350 | 20 |

**Ansprüche**

1. N-sulfenylierte Sulfonsäurecycloalkylamide der Formel

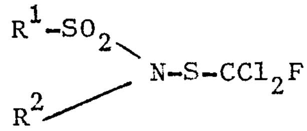

worin
$R^1$ Niederalkyl, Chloralkyl oder Dialkylamino und
$R^2$ einen gegebenenfalls durch Niederalkyl substituierten Cycloalkylrest bedeuten.

2. N-sulfenylierte Sulfonsäurecycloalkylamide nach Anspruch 1 der Formel

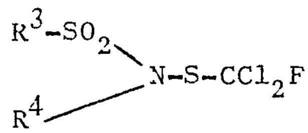

worin
$R^3$ Methyl, Ethyl, Chlormethyl, Chlorethyl, Dimethylamino oder Diethylamino und
$R^4$ einen gegebenenfalls durch 1 bis 4 Methyl- oder Ethylreste substituierten Cyclopentyl- oder Cyclohexylrest bedeuten.

3. Verfahren zur Herstellung von N-sulfenylierten Sulfonsäurecyclohexylamiden, dadurch gekennzeichnet, daß man Sulfonsäurecycloalkylamide der Formel

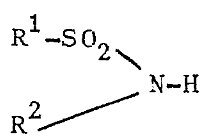

worin
$R^1$ und $R^2$ die in Anspruch 1 genannte Bedeutung haben mit einem Sulfenylchlorid der Formel

$$Cl-S-CCl_2F$$

in Gegenwart eines Verdünnungsmittels und eines säurebindenden Mittels umsetzt.

4. Mikrobizides Mittel, enthaltend Verbindungen der Formel

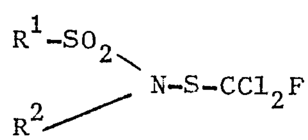

worin
$R^1$ Niederalkyl, Chloralkyl oder Dialkylamino und
$R^2$ ein gegebenenfalls durch Niederalkyl substituierter Cycloalkylrest bedeuten.

5. Verwendung von mikrobiziden Mitteln nach Anspruch 4 zum Schutz technischer Materialien.

6. Verwendung von mikrobiziden Mitteln nach Anspruch 4 zum Schutz von Holz gegen mikrobielle Zerstörung.

**Claims**

1. N-Sulphenylated sulphonic acid cycloalkylamides of the formula

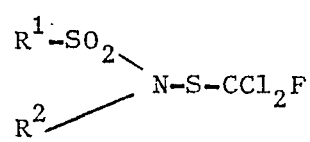

wherein
$R^1$ denotes lower alkyl, chloroalkyl or dialkylamino and
$R^2$ denotes a cycloalkyl radical which is optionally substituted by lower alkyl.

2. N-Sulphenylated sulphonic acid cycloalkylamides according to Claim 1 of the formula

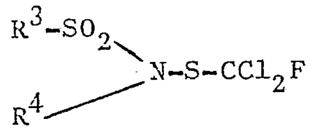

wherein

$R^3$ denotes methyl, ethyl, chloromethyl, chloroethyl, dimethylamino or diethylamino and

$R^4$ denotes a cyclopentyl or cyclohexyl radical which is optionally substituted by 1 to 4 methyl or ethyl radicals.

3. Process for the preparation of N-sulphenylated sulphonic acid cyclohexylamides, characterised in that sulphonic acid cycloalkylamides of the formula

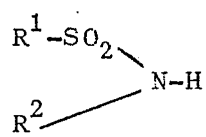

wherein

$R^1$ and $R^2$ have the meaning given in Claim 1, are reacted with a sulphenyl chloride of the formula

$$Cl—S—CCl_2F$$

in the presence of a diluent and in the presence of an acid-binding agent.

4. Microbicidal agent containing compounds of the formula

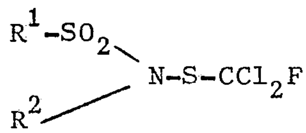

wherein

$R^1$ denotes lower alkyl, chloroalkyl or dialkylamino and

$R^2$ denotes a cycloalkyl radical which is optionally substituted by lower alkyl.

5. Use of microbicidal agents according to Claim 4 for the protection of industrial materials.

6. Use of microbicidal agents according to Claim 4 for protecting wood against microbial destruction.

**Revendications**

1. Cycloalkylamides d'acides sulfoniques N-sulfénylés de formule :

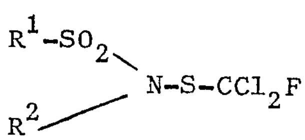

dans laquelle

$R^1$ représente un groupe alkyle inférieur, un groupe chloralkyle ou un groupe dialkylamino, et

$R^2$ représente un groupe cycloalkyle éventuellement substitué par un groupe alkyle inférieur.

2. Cycloalkylamides d'acides sulfoniques N-sulfénylés suivant la revendication 1 et répondant à la formule :

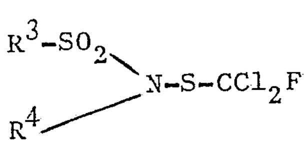

dans laquelle

$R^3$ représente un groupe méthyle, un groupe éthyle, un groupe chlorométhyle, un groupe chloréthyle, un groupe diméthylamino ou un groupe diéthylamino, et

$R^4$ représente un groupe cyclopentyle ou un groupe cyclohexyle éventuellement substitué par un à quatre groupes méthyle ou éthyle.

3. Procédé de préparation de cyclohexylamides d'acides sulfoniques N-sulfényles, caractérisé en ce qu'on fait réagir des cycloalkylamides d'acides sulfoniques de formule :

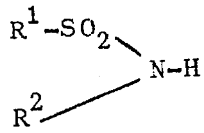

dans laquelle

$R^1$ et $R^2$ ont les significations mentionnées dans la revendication 1, avec un chlorure de sulfényle de formule :

$$Cl{-}S{-}CCl_2F$$

en présence d'un diluant et d'un agent fixateur d'acide.

4. Agent microbicide contenant des composés de formule :

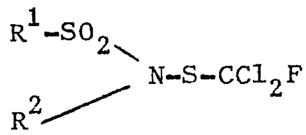

dans laquelle

$R^1$ représente un groupe alkyle inférieur, un groupe chloralkyle ou un groupe dialkylamino, et

$R^2$ représente un groupe cycloalkyle éventuellement substitué par un groupe alkyle inférieur.

5. Utilisation d'agents microbicides suivant la revendication 4 pour la protection des matériaux techniques.

6. Utilisation d'agents microbicides suivant la revendication 4 pour la protection du bois contre la destruction microbienne.